# EUROPÄISCHE PATENTANMELDUNG

(11) **EP 1 088 483 A1**
(43) Veröffentlichungstag der Anmeldung: **04.04.2001**
(21) Anmeldenummer: 99119464.8
(22) Anmeldetag: 30.09.1999
(51) Int. Cl.: A23K 1/16, A23K 1/18

(54) **Ergänzungsfuttermittel für Milchkühe, Kälber und Jungrinder**

(71) Anmelder: Kleencare Hygiene GmbH, 68526 Ladenburg (DE)
(72) Erfinder: Gerstädt, Peter, Dr., 27389 Lauenbrück (DE)
(74) Vertreter: Maiwald, Walter, Dr. Dipl.-Chem.

(57) **Zusammenfassung**

Die vorliegende Erfindung betrifft ein Ergänzungsfuttermittel für milchproduzierende Tiere, insbesondere Milchkühe und Milchziegen, ein Ergänzungsfuttermittel für Jungtiere in der Milchproduktion, sowie deren jeweilige Verfahren zur Herstellung und entsprechende Verwendungen. Das Ergänzungsfuttermittel für milchproduzierende Tiere ist gekennzeichnet durch einen Gehalt an wenigstens einer süß schmeckenden Substanz, wenigstens einem Pflanzenextrakt aus Yucca-Palmen, wenigstens einem aktiven Hefenpilz, wenigstens einem inaktiven Hefenpilz, sowie ggf. wenigstens einem Trägerstoff.

## Beschreibung

Die vorliegende Erfindung betrifft ein Ergänzungsfuttermittel für milchproduzierende Tiere, insbesondere Milchkühe und Milchziegen, ein Ergänzungsfuttermittel zur ergänzenden Fütterung von Jungtieren, insbesondere Kälber, Jungrinder und junge Milchziegen, die Verwendung solcher Futtermittel, sowie Verfahren zu deren Herstellung.

Eine grundlegende Aufgabe der modernen Milchviehhaltung ist die auf eine optimale Leistungsfähigkeit und Gesundheit der Nutztiere abgestellte Fütterung. Die Qualität des eingesetzten Futters hängt einerseits von den Nährstoffen, andererseits jedoch auch von den enthaltenen Spurenelementen, Vitaminen und Mineralien ab. Bekanntlich reicht der Mineralstoffgehalt des üblichen Wiesenfutters für eine optimale Versorgung des Milchviehs nicht aus. Nur ungenügend ist auch der Gehalt an den Spurenelementen Kupfer, Selen und Kobalt, sowie an den Vitaminen A, D und E.

Die fehlenden Mineralstoffe können dem Milchvieh auf verschiedene Weise zugeführt werden: Eine einfache Möglichkeit bieten die bekannten Leckschalen oder Lecksteine, welche zwar eine zumeist ökonomische Mineralstoffergänzung ermöglichen, jedoch nicht immer eine tatsächliche Versorgung gewährleisten. Eine teurere, jedoch sicherere Form der Ergänzung bieten deshalb Mineralstoffautomaten, über die die fehlenden Mineralstoffe in ein Ergänzungsfutter eingearbeitet werden. Diesem Mineralfutter können dann ggf. zusätzlich verschiedene Vitamine beigemengt werden, um so eine ausreichende Vitaminversorgung des Milchviehs zu gewährleisten.

Bisher wurden dem Mineralfutter vereinzelt auch aktive Hefen zugesetzt, um durch Eingriff in den Metabolismus des Milchviehs die Verdaulichkeit von organischen Substanzen zu erhöhen. Ein weiterer Ansatz, direkt in den Metabolismus der Tiere einzugreifen, ergibt sich über den Zusatz von Pflanzenextrakten und Aminosäuren zum Mineralfutter, um dadurch die Metabolisierung von Nährstoffen in günstiger Weise zu beeinflussen.

Es hat sich jedoch gezeigt, daß durch die bisher verfügbaren Ergänzungsfuttermittel keine merkliche Zunahme des Leistungsvermögens des Milchviehs erzielt wird. Schon aus der Sicht eines unter wirtschaftlichen Gesichtspunkten zu erzielenden Milchkontingents ist eine auf das einzelne Tier ausgerichtete optimale Ergänzungsfütterung anzustreben. Es ist deshalb wünschenswert, über ein Ergänzungsfuttermittel zu verfügen, das anhand seiner Zusammensetzung nicht nur für eine ausreichende Deckung des Bedarfs an Mineralstoffen, Spurenelementen und Vitaminen sorgt, sondern zudem in vorteilhafter Weise das Leistungsvermögen des Milchviehs zu heben vermag. Es ist eine Aufgabe der vorliegenden Erfindung, ein Ergänzungsfuttermittel für milchproduzierende Tiere anzugeben, das den genannten Nachteil der bisherigen Ergänzungsfuttermittel überwindet. Da der günstige Einfluß auf den Metabolismus des Milchviehs in besonders vorteilhafter Weise in der Aufzucht von Jungtieren wie Kälbern oder wachsenden Jungrindern eingesetzt werden kann, ist es eine weitere Aufgabe der vorliegenden Erfindung, ein Ergänzungsfuttermittel zur ergänzenden Fütterung von Jungtieren, insbesondere von Kälbern, Jungrindern, jungen Milchziegen und dergl. anzugeben, um so in wünschenswerter Weise das Wachstum zu beeinflussen.

Die Lösung dieser Aufgaben erfolgt durch die Merkmale der unabhängigen Ansprüche 1 und 12. Vorteilhafte Ausgestaltungen der Erfindung sind durch die Merkmale und Merkmalskombinationen der Unteransprüche dargestellt.

Erfindungsgemäß zeichnet sich das Ergänzungsfuttermittel für milchproduzierende Tiere, insbesondere Milchkühe und Milchziegen durch einen Gehalt an wenigstens einer süß schmeckenden Substanz, wenigstens einem faserhaltigen Pflanzenextrakt (insbesondere aus Yucca-Palmen), wenigstens einem aktiven Hefenpilz, wenigstens einem inaktiven Hefenpilz, sowie ggf. wenigstens einem Trägerstoff aus.

In vorteilhafter Weise kann durch die süß schmeckende Substanz die Schmackhaftigkeit des Ergänzungsfuttermittels erhöht werden, um so die Futteraufnahme durch das Milchvieh zu steigern.

Weiterhin ist es bevorzugt, daß dem Ergänzungsfuttermittel wenigstens ein weiterer Aromastoff, insbesondere Vanille, zugefügt wird.

Wie Versuche an Milchkühen ergeben haben, kann durch so abgestimmte Aromen, Geschmacks-und Süßstoffe die tägliche Futteraufnahme um 1,9 bis 3,2 kg Trockenfutter pro Kuh erhöht werden. Dies führt in der Folge zu einer verbesserten Energieversorgung des Milchviehs.

Der zugegebene Pflanzenextrakt insbesondere aus Yucca-Palmen greift in den intermediären Stoffwechsel des Milchviehs ein. In vorteilhafter Weise wird dabei die Futterverwertung, insbesondere der enthaltenen Proteine, gesteigert. Der Pflanzenextrakt fördert die Enzymaktivität im Pansenbereich, wodurch die Abbaugeschwindigkeit bzw. Abbaurate von Nährstoffen gesteigert wird. Wie Versuche an Milchkühen ergeben haben, kann die Futterverwertung der Proteine dabei um 5,7 bis 12,4 Prozentpunkte gesteigert werden. In vorteilhafter Weise kann durch den Pflanzenextrakt so der Verdauungsquotient, d. h. das Verhältnis aus der Differenz zwischen zugeführter und abgeführter Energie zur zugeführten Energie, erhöht werden. Durch die Zugabe des aktiven Hefenpilzes kann der Wirkungsgrad der Verdaulichkeit der organischen Substanzen verbessert werden. Dies führt in der Folge zu einer verbesserten Futterverwertung und damit zu einer Erhöhung des genannten Verdauungsquotienten durch die lebenden, aktiven Hefenpilze.

Die Zugabe eines inaktiven Hefenpilzes hat einen günstigen Einfluß auf den intermediären Stoffwechsel im Tier. Durch den Zusatz von hochwertigen Vitaminhefen und hochverdaulichen nativen essentiellen Aminosäuren kann die Biomasse im Pansen deutlich erhöht werden. Versuche haben ergeben, daß die Biomasse im Pansen um bis zu 22 % zunehmen kann. Als Folge hieraus resultiert eine verbesserte Futterverwertung, welche sodann in einer Zunahme des Verdauungsquotienten ihren Niederschlag findet.

Vorzugsweise wird dem Ergänzungsfuttermittel Maisstärke als Trägerstoff zugesetzt. Neben ihrer Eigenschaft als Trägerstoff trägt die Maisstärke zur Energieversorgung des Milchviehs bei. Eine weitere vorteilhafte Eigenschaft ist ihre Funktion als Enzymaktivator mit einer speziellen Förderung der Enzymaktivität im Dünndarmbereich.

Erfindungsgemäß ist es bevorzugt, daß das Ergänzungsfuttermittel wenigstens einen mikrobiellen Zusatzstoff aufweist. Hierbei handelt es sich insbesondere um einen Pilz der Gattung Saccharomyces cerevisiae, gekennzeichnet durch die Klassifizierung IP 1077. Hierbei ist es bevorzugt, daß Saccharomyces cerevisiae in einer Menge von wenigstens 5 x 10⁹ KBE pro Kilogramm Gesamtgewicht des Ergänzungsfuttermittels enthalten ist. In vorteilhafter Weise kann durch diesen mikrobiellen Zusatzstoff, der mit Ausnahmegenehmigung des BML vom 22. Februar 1995 zugelassen wurde, eine Stabilisierung der Darmflora erreicht werden.

Weiterhin ist es erfindungsgemäß bevorzugt, daß das Ergänzungsfuttermittel einen Gehalt an Spurenelementen, wie Kupfer, Selen oder Kobalt aufweist, wodurch ggf. eine mangelhafte Versorgung durch das Wiesenfutter ausgeglichen werden kann. Insbesondere ist es bevorzugt, wenn Kupfer in einer Menge von 0-250 mg, vorzugsweise zwischen 50 und 100 mg und besonders bevorzugt zwischen 50 und 75 mg, Selen in einer Menge von etwa 50-150 mg, vorzugsweise etwa 100 mg, und Kobalt in einer Menge von etwa 40-120 mg, vorzugsweise etwa 80 mg, jeweils bezogen auf ein Kilogramm Gesamtgewicht des Ergänzungsfuttermittels, zugegeben werden. Noch bevorzugter ist, wenn Kupfer mit einem nativen Gehalt von etwa 68 mg vorliegt

Um Mängel im Vitamingehalt des Grundfutters auszugleichen, ist es angezeigt, daß das Ergänzungsfuttermittel wenigstens ein (Pro-)Vitamin, insbesondere Vitamin A, Vitamin D3, oder Vitamin E aufweist. Erfindungsgemäß kann inaktiver Hefepilz, wie Vitaminhefen, zusammen mit Vitamin E dem Ergänzungsfuttermittel zugesetzt werden. So ist beispielsweise ein hoher Vitamin E-Gehalt vor allem zur Stärkung des Immunstatus einer Milchkuh von Nutzen. Dabei wird es bevorzugt, daß das Vitamin A in einer Menge von etwa 5.900 I.E., das Vitamin D3 in einer Menge von etwa 1.350 I.E. und das Vitamin E in einer Menge von etwa 10.000 mg, jeweils bezogen auf ein Kilogramm Gesamtgewicht des Ergänzungsfuttermittels, enthalten ist.

Erfindungsgemäß ist es von Vorteil, wenn wenigstens ein Emulgator, insbesondere Lutein, zugesetzt wird. Zudem weist das Ergänzungsfuttermittel vorteilhaft einen Gehalt an Tartracin (E 102) (gelber Farbstoff), und/oder andere geeignete Farbstoffe auf. Ein Farbstoffzusatz erlaubt es, Verwechslungen von unterschiedlichen Ergänzungsfuttermitteln zu vermeiden. Der Zusatz von Farbstoff(en) dient dabei speziell der Wiedererkennung von Ergänzungsfuttermitteln.

Eine bevorzugte Ausführungsform des erfindungsgemäßen Ergänzungsfuttermittels sieht vor, daß der Pflanzenextrakt aus Yucca-Palmen in einer Menge von etwa 2 Gew.-%, bezogen auf das Gesamtgewicht des Ergänzungsfuttermittels, enthalten ist.

Eine besonders bevorzugte Ausführungsform des Ergänzungsfuttermittels zeichnet sich durch die folgende Zusammensetzung, je Kilogramm Gesamtgewicht, aus:

Rohprotein 15,50 Gew.-%, Rohfett 3,10 Gew.-%, Rohfaser 0,85 Gew.-%, Stärke 13,25 Gew.-%, Gesamtzucker 39,20 Gew.-%, Calcium 4,57 Gew.-%, Phosphor 0,34 Gew.-%, Natrium 0,14 Gew.-%, Kalium 0,53 Gew.-%, Magnesium 0,11 Gew.-%, Sulfat 0,04 Gew.-%, Chlorid 0,98 Gew.-%, ELOS 83,3 Gew.-%, NDF 3,7 Gew.-%, DCAB + 137 meq/kg, entsprechend einer Netto-Energieleistung von 7,61 Megajoule pro Kilogramm Gesamtgewicht. Die Abkürzung "ELOS" kennzeichnet den über eine Spektralanalyse bestimmten Gehalt an Zucker und löslichen Kohlenhydraten. Die Abkürzung "NDF" bezeichnet die sogenannte neutrale Detergenzienphase, worin wasserlösliche Lignine und Zellulose umfaßt sind. Die Abkürzung "DCAB" kennzeichnet das Kationen/Anionen-Gleichgewicht.

Ein charakteristisches Merkmal der vorliegenden Erfindung ist ein Ergänzungsfuttermittel zur ergänzenden Fütterung von Jungtieren, insbesondere von Kälbern, Jungrindern und jungen Milchziegen, welches gekennzeichnet ist durch einen Gehalt an wenigstens einer süß schmeckenden Substanz, wenigstens einem inaktiven Hefenpilz, sowie ggf. wenigstens einem Trägerstoff.

Hierbei ist es von Vorteil, wenn das Ergänzungsfuttermittel wenigstens einen Aromastoff aufweist. Wie bereits bei dem erfindungsgemäßen Ergänzungsfuttermittel für milchproduzierende Tiere dargestellt, kann durch abgestimmte Aromen, Süß- und Geschmacksstoffe eine Erhöhung der täglichen Futteraufnahme und damit der Energieversorgung der Jungtiere erreicht werden. Wie Versuche ergeben haben, kann die tägliche Futteraufnahme bei Kälbern und Jungrindern pro Tier um 420 bis 1.240 g Trockenmasse gesteigert werden.

Durch den Zusatz von hochwertigen Vitaminhefen und hochverdaulichen nativen essentiellen Aminosäuren mit gutem Dünndarmpotential kann die Biomasse im Pansen in vorteilhafter Weise erhöht werden. Versuche haben eine Erhöhung um bis zu 14 % gezeigt. Die inaktiven Hefen greifen dabei in den intermediären Stoffwechsel der Jungtiere ein und erhöhen die Verdaulichkeit der zugeführten Nahrung. Dies ist in einer Zunahme des Verdauungsquotienten erkennbar.

Als Trägerstoff wird bevorzugt Maisstärke eingesetzt, welche neben ihrer Trägereigenschaft zur Energieversorgung der Jungtiere beiträgt und zudem die Enzymaktivität der Jungtiere im Dünndarmbereich fördert.

Erfindungsgemäß ist es bevorzugt, daß das Ergänzungsfuttermittel zur ergänzenden Fütterung von Jungtieren wenigstens einen mikrobiellen Zusatzstoff aufweist. Bei diesem Zusatzstoff handelt es sich insbesondere um sporenbildende Probiotika, die schwerpunktmäßig im Dünndarm eingesetzt werden. Dies ist insbesondere Bacillus cereus var. toyoi der Stämme mit der Bezeichnung CNCM I-1012/NCIB 40112. Durch den mikrobiellen Zusatzstoff wird über eine höhere Verdaulichkeit der organischen Substanzen eine Verbesserung der Wachstumsleistung der Jungtiere, d. h. ein höherer Fleischansatz, erzielt.

Zudem wird durch eine gesteigerte Effizienz in der Energie- und Proteinumsetzung eine verbesserte Futterverwertung erreicht: Versuche haben ergeben, daß durch den Zusatz von Bacillus cereus var. toyoi bis zu 56 g mehr Futter pro Rind und Tag verwertet werden kann, was unter anderem in einer Erhöhung des Verdauungsquotienten zu erkennen ist.

Erfindungsgemäß ist es bevorzugt, daß Bacillus cereus var. toyoi der beiden Stämme mit der Kennzeichnung CNCM I-1012/NCIB 40112 in einer Menge von wenigstens 60 x 10⁹ KBE pro Kilogramm Gesamtgewicht des Ergänzungsfuttermittels enthalten ist.

Weiterhin ist es von Vorteil, wenn das Ergänzungsfuttermittel für die Jungtiere durch einen Gehalt an Spurenelementen, wie Kupfer, Selen, oder Kobalt, ausgezeichnet ist. Hier ist es bevorzugt, wenn Kupfer in einer Menge von etwa 0-250 mg, vorzugsweise zwischen 10 und 100 mg und besonders bevorzugt zwischen 15 und 50 mg, Selen in einer Menge von etwa 50-150 mg, vorzugsweise etwa 100 mg und Kobalt in einer Menge von etwa 40-120 mg, vorzugsweise von etwa 80 mg, jeweils bezogen auf ein Kilogramm Gesamtgewicht des Ergänzungsfuttermittels für Jungtiere, enthalten ist. Noch bevorzugter ist, wenn Kupfer mit einem nativen Gehalt von 28 mg vorliegt.

Das Ergänzungsfuttermittel für Jungtiere kann ebenso wie das Ergänzungsfuttermittel für ausgewachsenes Milchvieh wenigstens ein (Pro-)Vitamin, insbesondere Vitamin A, Vitamin D3 oder Vitamin E, aufweisen. Erfindungsgemäß kann ein inaktiver Hefepilz, beispielsweise Vitaminhefe, zusammen mit Vitamin E dem Ergänzungsfuttermittel zugesetzt werden. Hierbei ist es erfindungsgemäß bevorzugt, wenn das Vitamin A in einer Menge von etwa 5.900 I.E., das Vitamin D3 in einer Menge von etwa 1.350 I.E. und das Vitamin E in einer Menge von etwa 10.000 mg, jeweils bezogen auf ein Kilogramm Gesamtgewicht des Ergänzungsfuttermittels, enthalten ist.

Vorzugsweise enthält das Ergänzungsfuttermittel wenigstens einen Emulgator, insbesondere Luciferin, orangen Farbstoff und/oder andere geeignete Farbstoffe, und zeichnet sich durch einen Gehalt an Cochenille (E 124) aus. Ein Farbstoffzusatz erlaubt es, Verwechslungen von unterschiedlichen Ergänzungsfuttermitteln zu vermeiden. Der Zusatz von Farbstoff(en) dient dabei speziell der Wiedererkennung von Ergänzungsfuttermitteln.

Erfindungsgemäß ist es von Vorteil, wenn der süß schmeckende Stoff des Ergänzungsfuttermittels einen Zucker, beispielsweise Traubenzucker, Fruchtzucker, oder einen Zuckeraustauschstoff, beispielsweise Aspartam oder Saccharin, umfaßt.

Ein charakteristisches Merkmal der Erfindung ist ein Verfahren zur Herstellung eines Ergänzungsfuttermittels für milchproduzierende Tiere, das dadurch gekennzeichnet ist, daß wenigstens eine süß schmeckende Substanz, wenigstens ein faserhaltiger Pflanzenextrakt (insbesondere aus Yucca-Palmen), wenigstens ein aktiver Hefenpilz, wenigstens ein inaktiver Hefenpilz, sowie ggf. ein Trägerstoff vermischt werden.

Ein weiteres charakteristisches Merkmal der Erfindung ist ein Verfahren zur Herstellung eines Ergänzungsfuttermittels für Jungtiere, insbesondere von Kälbern, Jungrindern, und jungen Milchziegen, welches dadurch gekennzeichnet ist, daß wenigstens eine süß schmeckende Substanz, wenigstens ein inaktiver Hefenpilz, sowie ggf. wenigstens ein Trägerstoff, vermischt werden.

Erfindungsgemäß wird zudem die Verwendung des Ergänzungsfuttermittels für milchproduzierende Tiere zur ergänzenden Fütterung von milchproduzierenden Tieren, insbesondere Milchkühen und Milchziegen, beansprucht. Hierbei ist es bevorzugt, daß das Ergänzungsfuttermittel bei Milchkühen in einer Menge von etwa 50 g pro Tier und pro Tag, bzw. in einer Menge von 1,0 kg pro Tonne totaler Mischrations-Mischung verfüttert, wird.

Weiterhin wird es erfindungsgemäß beansprucht, daß das Ergänzungsfuttermittel für Jungtiere zur ergänzenden Fütterung von Kälbern und Jungrindern verwendet wird. Hierbei ist es bevorzugt, wenn das Ergänzungsfuttermittel in einer Menge von etwa 25 g pro Tier und pro Tag, bzw. in einer Menge von 1,0 kg pro Tonne totaler Mischrations-Mischung verfüttert wird.

Weiterhin wird die Verwendung der gezeigten Ergänzungsfuttermittel zur Förderung des mikrobiellen Wachstums im Pansen, insbesondere nach erfolgter Antibiotika-Therapie, beansprucht.

Durch die nunmehr folgende Angabe zweier erfindungsgemäßer Ausführungsbeispiele wird die Erfindung noch besser verständlich, und weitere Vorteile und Merkmale der Erfindung treten hervor. Selbstverständlich sind die Ausführungsbeispiele nur zum Zwecke der Anschaulichkeit angegeben, und sollen die Erfindung in keiner Weise darauf beschränken.

### Beispiel 1

Ein Ergänzungsfuttermittel für Milchkühe mit totaler Mischration in Hochleistungsherden setzt sich aus den folgenden Komponenten zusammen: Aroma, Geschmacksverstärker (APX-1198), inaktiver Hefenpilz des Stamms JMB-299, aktiver Hefenpilz des Stamms PG-SC 20, Pflanzenextrakt aus Yucca-Palmen (RIPS, PG-MA 399), Aminosäuren, Lutein, Maisstärke.

Eine Analyse des Gehalts an Inhaltsstoffen ergibt: Rohprotein 15,50 %, Rohfett 3,10 %, Rohfaser 0,85 %, Stärke 13,25 %, Gesamtzucker 39,20 %, ELOS 83,3 %, NDF 3,7 %, Calcium 0,82 %, Phosphor 0,43 %, Natrium 0,22 %, Kalium 0,62 %, Magnesium 0,15 %, Sulfat 0,03 %, Chlorid 0,35%.

Dieser Gehalt an Inhaltsstoffen entspricht einer Netto-Energieleistung pro Kilogramm von 7,61 MJ.

Das Kationen/Anionen-Gleichgewicht beträgt + 137 meq pro Kilogramm Ergänzungsfuttermittel.

Weiterhin werden je Kilogramm Mischfutter die folgenden Zusatzstoffe hinzugegeben: 68 mg Kupfer, 100 mg Selen, 80 mg Kobalt, 10.000 mg Vitamin E, 5.900 I.E. Vitamin A, 1.350 I.E. Vitamin D3.

Als mikrobieller Zusatzstoff zur Stabilisierung der Darmflora wird Saccharomyces cerevisiae des Stamms IP 1077 mit mindestens 5 x 10⁹ KBE je Kilogramm Futtermittel hinzugegeben.

Zudem wird Tartracin (E 102) zugesetzt.

Das Ergänzungsfuttermittel für Milchkühe wird mit einer Einsatzmenge von 50 g pro Tier und Tag bzw. 1,0 kg pro Tonne totaler Mischrations-Mischung verfüttert. Der Einsatzzeitraum ist während der Laktation und Trockenstehzeit. Die Mindesthaltbarkeit beträgt mindestens 6 Monate nach Herstellung.

### Beispiel 2

Ergänzungsfuttermittel für Kälber und wachsende Jungrinder zur Zugabe zu ausgeglichenen totalen Mischrationen oder in Kälberaufzucht-Futtermittel.

Dieses Ergänzungsfuttermittel zeichnet sich durch die folgende Zusammensetzung aus:

Aroma- bzw. Geschmacksverstärker (APX-1198), inaktiver Hefenpilz des Stamms JMB-299, mikrobieller Zusatzstoff Bacillus cereus var. toyoi, Handelsname Toyocerin (Stämme: CNCM I-1012/NCIB 40112) mit mindestens 60 x 10⁹ KBE je Kilogramm Futtermittel, Emulgator Luciferin und Trägerstoff Maisstärke. Eine Analyse des Gehaltes an Inhaltsstoffen ergibt:

Rohprotein 13,40 %, Rohfett 2,60 %, Rohfaser 0,93 %, Stärke 22,50 %, Gesamtzucker 28,20 %, ELOS 75,00 %, NDF 4,61 %, Calcium 4,57 %, Phosphor 0,34 %, Natrium 0,14 %, Kalium 0,53 %, Magnesium 0,11 %, Sulfat 0,04 %, Chlorid 0,98 %.

Dies entspricht einer umsetzbaren Energie (ME) von 11,04 MJ pro Kilogramm Futtermittel.

Das Kationen/Anionen-Gleichgewicht beträgt + 145 meq pro Kilogramm Futtermittel.

Weiterhin werden je Kilogramm Mischfutter die folgenden Zusatzstoffe zugegeben: 28 mg Kupfer, 100 mg Selen, 80 mg Kobalt, 5.900 I.E. Vitamin A, 1.350 I.E. Vitamin D3 und 10.000 mg Vitamin E.

Das Ergänzungsfuttermittel wird mit einer Einsatzmenge von 25 g pro Tier und Tag bzw. 1,0 kg pro Tonne totaler Mischrations-Mischung eingesetzt. Der Einsatzzeitraum ist die Kälber- und Jungrinderaufzucht. Die Haltbarkeit beträgt mindestens 6 Monate nach Herstellung. Der Zusammensetzung wird Cochenille (E 124) zugegeben.

## Patentansprüche

1. Ergänzungsfuttermittel für milchproduzierende Tiere, insbesondere Milchkühe und Milchziegen,
**gekennzeichnet durch** einen Gehalt an wenigstens einer süß schmeckenden Substanz, wenigstens einem faserhaltigen Pflanzenextrakt (insbesondere aus Yucca-Palmen), wenigstens einem aktiven Hefenpilz, wenigstens einem inaktiven Hefenpilz, sowie ggf. wenigstens einem Trägerstoff.

2. Ergänzungsfuttermittel nach Anspruch 1,
**dadurch gekennzeichnet**, daß das Ergänzungsfuttermittel wenigstens einen mikrobiellen Zusatzstoff, insbesondere Saccharomyces cerevisiae (Stamm der Kennzeichnung IP 1077) enthält.

3. Ergänzungsfuttermittel nach Anspruch 2,
**dadurch gekennzeichnet**, daß Saccharomyces cerevisiae (Stamm der Kennzeichnung IP 1077) in einer Menge von wenigstens 5 x 10⁹ KBE pro Kilogramm Gesamtgewicht enthalten ist.

4. Ergänzungsfuttermittel nach einem der vorhergehenden Ansprüche,
**gekennzeichnet durch** einen Gehalt an Spurenelementen, wie Kupfer, Selen oder Kobalt.

5. Ergänzungsfuttermittel nach Anspruch 4,
**dadurch gekennzeichnet**, daß Kupfer in einer Menge von etwa 68 mg, Selen in einer Menge von etwa 100 mg und Kobalt in einer Menge von etwa 80 mg, jeweils pro Kilogramm Gesamtgewicht, enthalten ist.

6. Ergänzungsfuttermittel nach einem der vorhergehenden Ansprüche,
**dadurch gekennzeichnet**, daß das Ergänzungsfuttermittel, ggf. anstelle des inaktiven Hefepilzes, wenigstens ein (Pro-)Vitamin, insbesondere Vitamin A, Vitamin D3 oder Vitamin E, enthält.

7. Ergänzungsfuttermittel nach Anspruch 6,
**dadurch gekennzeichnet**, daß Vitamin A in einer Menge von etwa 5.900 I.E., Vitamin D3 in einer Menge von etwa 1.350 I.E. und Vitamin E in einer Menge von etwa 10.000 mg, jeweils pro Kilogramm Gesamtgewicht, enthalten ist.

8. Ergänzungsfuttermittel nach einem der vorhergehenden Ansprüche,
**dadurch gekennzeichnet**, daß das Ergänzungsfuttermittel wenigstens einen Emulgator, insbesondere Lutein, enthält.

9. Ergänzungsfuttermittel nach einem der vorhergehenden Ansprüche,
**gekennzeichnet durch** einen Gehalt an Tartracin (E 102).

10. Ergänzungsfuttermittel nach einem der vorhergehenden Ansprüche,
**dadurch gekennzeichnet**, daß der Pflanzenextrakt aus Yucca-Palmen in einer Menge von etwa 2 Gew.-%, bezogen auf das Gesamtgewicht, enthalten ist.

11. Ergänzungsfuttermittel zur ergänzenden Fütterung von Jungtieren, insbesondere Kälber, Jungrinder und junge Milchziegen,
**gekennzeichnet durch** einen Gehalt an wenigstens einer süß schmeckenden Substanz, wenigstens einem inaktiven Hefenpilz, sowie ggf. wenigstens einem Trägerstoff.

12. Ergänzungsfuttermittel nach Anspruch 11,
**dadurch gekennzeichnet**, daß das Ergänzungsfuttermittel wenigstens einen mikrobiellen Zusatzstoff, insbesondere Bacillus cereus var. toyoi (Stämme: CNCM I-1012/NCIB 40112), enthält.

13. Ergänzungsfuttermittel nach Anspruch 12,
**dadurch gekennzeichnet**, daß Bacillus cereus var. toyoi (Stämme: CNCM I-1012/NCIB 40112) in einer Menge von wenigstens 60 x 10⁹ KBE pro Kilogramm Gesamtgewicht enthalten ist.

14. Ergänzungsfuttermittel nach einem der Ansprüche 11 bis 13,
**gekennzeichnet durch** einen Gehalt an Spurenelementen, wie Kupfer, Selen oder Kobalt.

15. Ergänzungsfuttermittel nach Anspruch 14,
**dadurch gekennzeichnet**, daß Kupfer in einer Menge von etwa 28 mg, Selen in einer Menge von etwa 100 mg und Kobalt in einer Menge von etwa 80 mg, jeweils pro Kilogramm Gesamtgewicht, enthalten ist.

16. Ergänzungsfuttermittel nach einem der Ansprüche 11 bis 15,
**dadurch gekennzeichnet**, daß das Ergänzungsfuttermittel, ggf. anstelle des inaktiven Hefepilzes wenigstens ein (Pro-)Vitamin, insbesondere Vitamin A, Vitamin D3 oder Vitamin E enthält.

17. Ergänzungsfuttermittel nach Anspruch 16,
**dadurch gekennzeichnet**, daß Vitamin A in einer Menge von etwa 5.900 I.E., Vitamin D3 in einer Menge von etwa 1.350 I.E. und Vitamin E in einer Menge von etwa 10.000 mg, jeweils pro Kilogramm Gesamtgewicht, enthalten ist.

18. Ergänzungsfuttermittel nach einem der Ansprüche 11 bis 17,
**dadurch gekennzeichnet**, daß das Ergänzungsfuttermittel wenigstens einen Emulgator, insbesondere Luciferin, enthält.

19. Ergänzungsfuttermittel nach einem der Ansprüche 11 bis 18,
**gekennzeichnet durch** einen Gehalt an Cochenille (E 124).

20. Ergänzungsfuttermittel nach einem der vorhergehenden Ansprüche,
**dadurch gekennzeichnet**, daß das Ergänzungsfuttermittel wenigstens einen Aromastoff, insbesondere Vanille, enthält.

21. Ergänzungsfuttermittel nach einem der vorhergehenden Ansprüche,
**dadurch gekennzeichnet**, daß der süß schmeckende Stoff einen Zucker, beispielsweise Traubenzucker, Fruchtzucker, oder einen Zuckeraustauschstoff, beispielsweise Aspartam oder Saccharin umfaßt.

22. Ergänzungsfuttermittel nach einem der vorhergehenden Ansprüche,
**dadurch gekennzeichnet**, daß der Trägerstoff Maisstärke umfaßt.

23. Verfahren zur Herstellung eines Ergänzungsfuttermittels nach einem der Ansprüche 1 bis 10 und 20 bis 22,
**dadurch gekennzeichnet**, daß wenigstens eine süß schmeckende Substanz, ggf. wenigstens ein Pflanzenextrakt aus Yucca-Palmen, wenigstens ein aktiver Hefenpilz, wenigstens ein inaktiver Hefenpilz, sowie ggf. wenigstens ein Trägerstoff vermischt werden.

24. Verfahren zur Herstellung eines Ergänzungsfuttermittels nach einem der Ansprüche 11 bis 22,
**dadurch gekennzeichnet**, daß wenigstens eine süßschmeckende Substanz, wenigstens ein inaktiver Hefenpilz, sowie gegebenenfalls wenigstens ein Trägerstoff vermischt werden.

25. Verwendung des Ergänzungsfuttermittels nach einem der Ansprüche 1 bis 10 und 20 bis 22 zur ergänzenden Fütterung von milchproduzierenden Tieren, insbesondere Milchkühen und Milchziegen.

26. Verwendung des Ergänzungsfuttermittels nach Anspruch 25,
**dadurch gekennzeichnet**, daß das Ergänzungsfuttermittel bei Milchkühen in einer Menge von 50 g/Tier und pro Tag, bzw. in einer Menge von 1,0 kg/t totaler Mischrations-Mischung, verfüttert wird.

27. Verwendung des Ergänzungsfuttermittels nach einem der Ansprüche 11 bis 22 zur ergänzenden Fütterung von Jungtieren, insbesondere Kälber, Jungrinder und junge Milchziegen.

28. Verwendung des Ergänzungsfuttermittels nach Anspruch 27,
**dadurch gekennzeichnet**, daß das Ergänzungsfuttermittel in einer Menge von 25 g/Tier und pro Tag, bzw. in einer Menge von 1,0 kg/t totaler Mischrations-Mischung verfüttert wird.

29. Verwendung des Ergänzungsfuttermittels nach einem der vorhergehenden Ansprüche, zur Förderung des mikrobiellen Wachstums im Pansen, insbesondere nach Antibiotika-Therapie.
